**Europäisches Patentamt**

**European Patent Office**

**Office européen des brevets**

(11) Veröffentlichungsnummer: **0 368 138**

**A1**

# (12) EUROPÄISCHE PATENTANMELDUNG

(21) Anmeldenummer: **89120272.3**

(22) Anmeldetag: **02.11.89**

(51) Int. Cl.⁵: **B01J 20/02**

(30) Priorität: **05.11.88 DE 3837614**

(43) Veröffentlichungstag der Anmeldung:
**16.05.90 Patentblatt 90/20**

(84) Benannte Vertragsstaaten:
**BE CH DE FR GB IT LI NL SE**

(71) Anmelder: **MERCK PATENT GESELLSCHAFT MIT BESCHRÄNKTER HAFTUNG**
**Frankfurter Strasse 250 Postfach 4119**
**D-6100 Darmstadt(DE)**

(72) Erfinder: **Cabrera, Karin, Dr.**
**Am Hermannsberg 21**
**D-6080 Gross Gerau(DE)**
Erfinder: **Jost, Willi, Dr.**
**Gabelsbergerstrasse 32**
**D-6070 Langen(DE)**
Erfinder: **Krebs, Karl-Friedrich, Dr.**
**Ringstrasse 156**
**D-6101 Rossdorf 1(DE)**

(54) **Adsorptionsmittel für die Chromatographie.**

(57) Die Erfindung betrifft ein neues Adsorptionsmittel, das im wesentlichen aus Siliciumcarbid besteht, sowie seine Verwendung als Trägermaterial für die Chromatographie.

EP 0 368 138 A1

## Adsorptionsmittel für die Chromatographie

Die Erfindung betrifft ein neues Adsorptionsmittel, das im wesentlichen aus Siliciumcarbid besteht und sich insbesondere als Trägermaterial in der Chromatographie eignet.

Es sind zahlreiche Materialien bekannt, die die verschiedenartigsten Substanzen oder Substanzgemische zu adsorbieren vermögen, so beispielsweise Cellulose, Kieselgur, Aluminiumoxid und vor allem Kieselgel in seinen zahlreichen Modifikationen. Einige dieser Materialien, insbesondere Kieselgel, sind aber im alkalischen Medium instabil, so daß sie für bestimmte, nur basenstabile Stoffe, also insbesondere für solche biologischer Herkunft, nicht oder nur beschränkt einsetzbar sind. Kieselgel neigt überdies bei mechanischer Beanspruchung, wie häufiges Rühren oder Ausübung von hohem Druck bei der Flüssigkeitschromatographie, zu Instabilität. Vor allem poröses Material zerbricht und zerbröselt leicht und verliert somit seine gewünschten Eigenschaften.

Es bestand somit die Aufgabe, ein neues Adsorptions- und chromatographisches Trägermaterial zur Verfügung zu stellen, das hohe physikalische und chemische Stabilität, zugleich aber auch gute Adsorptions- und Trenneigenschaften aufweist.

Es wurde nun gefunden, daß Siliciumcarbid als Adsorptionsmittel und chromatographisches Trägermaterial erfolgreich eingesetzt werden kann.

Siliciumcarbid wird aufgrund seiner physikalischen und chemischen Eigenschaften, wie große Härte, extreme Reaktionsträgheit, hohe Wärmeleitfähigkeit und geringe Wärmeausdehnung seit vielen Jahren als wertvoller Werkstoff in den verschiedensten technischen Bereichen eingesetzt. So findet Siliciumcarbid bekanntermaßen Verwendung beispielsweise als Desoxidations- und Legierungsmittel in der chemischen Industrie, als feuerfestes Material in der keramischen Industrie, als Schleif- und Gleitmittel, als Auskleidungsmaterial in Hochöfen, als Werkstoff für Gasturbinen und Turboladerrädern oder auch als Verstärkungsmaterial in der Luft- und Raumfahrt. Eine umfangreiche Darstellung der Eigenschaften, Herstellungsmethoden und Anwendungsgebiete von Siliciumcarbid ist in "Gmelin Handbook of Inorg. Chem., Volume B: Siliciumcarbide, 1986, Springer Verlag" zu finden.

Die Eignung von Siliciumcarbid als Adsorptions- und Chromatographie-Material ist nicht nur neu sondern auch aufgrund der bislang bekannten Verwendungszwecke von Siliciumcarbid überraschend.

Im Trennverhalten (Elutionsreihenfolge) gleicht als chromatographisches Trägermaterial verwendetes Siliciumcarbid qualitativ unmodifiziertem Kieselgel. Bezogen auf eine definierte aktive Oberfläche weist Siliciumcarbid aber überraschenderweise eine zum Teil deutlich höhere Selektivität als Kieselgel auf. So können mit relativ wenig Material sehr gute Trennleistungen oder Adsorptionen erzielt werden. Mechanische Beanspruchungen (z.B. hohe Drucke) bewirken praktisch keine Veränderungen in Textur und Stabilität des neuen Träger- bzw. Adsorptionsmate rials. Auch zeigt sich das Material inert gegenüber den meisten chemischen Einflüssen, wie z.B. starke Säuren, Basen oder aggressive Lösungsmittel. So können Vor- und Nachbehandlungen des Materials mit starken Basen beispielsweise zu Reinigungszwecken durchgeführt werden, ohne daß sich der Chromatographieträger zersetzt oder destabilisiert. Im Gegensatz zu anderen bekannten Trägermaterialien, wie insbesondere Kieselgel, können an Siliciumcarbid Substanzen in deutlich alkalischen Medien problemlos adsorbiert bzw. chromatographiert werden. Dies ist vor allem für die Chromatographie von biologischen Stoffen wie beispielsweise Peptiden, Proteinen, Körperflüssigkeiten und Pharmawirkstoffen von großem Vorteil. In diesem Zusammenhang ist die steuerbare Beeinflussung des Trennverhaltens bzw. der Selektivität des erfindungsgemäßen Adsorptions- und Chromatographiematerials alleine durch pH-Wert-Änderungen, insbesondere beim Übergang sauer/alkalisch, hervorzuheben, wodurch in bestimmten Fällen sogar eine Umkehrung der Elutionsreihenfolge der zu trennenden Substanzen erreicht werden kann. Siliciumcarbid weist also als Adsorptions- und chromatographisches Trägermaterial eine Vielzahl entscheidender Vorteile auf.

Gegenstand der Erfindung ist somit ein Adsorptionsmaterial, im wesentlichen bestehend aus Siliciumcarbid.

Gegenstand der Erfindung ist ferner die Verwendung von Siliciumcarbid als Adsorptionsmittel.

Schließlich ist Gegenstand der Erfindung die Verwendung von Siliciumcarbid als Trägermaterial in der Chromatographie.

Die Effektivität von Adsorptions- und Chromatographiematerialien wird bekanntermaßen maßgeblich bestimmt von der Größe der spezifischen bzw. aktiven Oberfläche. Diese wiederum hängt unter anderem von der Oberflächenbeschaffenheit, der Partikelform und -größe und gegebenenfalls von der Porosität bzw. dem Porenvolumen ab. Es ist daher nur verständlich, daß die Herstellungsmethode sowie gegebenenfalls vorgenommene Reinigungs- und Nachbehandlungsschritte die Qualität und Leistungsfähigkeit eines bestimmten Materials nachdrücklich beeinflussen. Das gilt auch für das erfindungsgemäße Adsorptions- bzw. Chromatographiematerial. Im Handel erhältliches Siliciumcarbid ist zumeist nach dem bekannten Acheson- oder ESK-Verfahren hergestellt und wird durch Zermahlen in verschiedenen Partikelgrößen angeboten.

Erfindungsgemäß können derartig hergestellte Siliciumcarbid-Pulver mit einem mittleren Partikeldurchmesser zwischen 0,5 µm und 2000 µm, insbesondere aber zwischen 1 µm und 100 µm, erfolgreich für chromatographische Trennungen bzw. Adsorptionen eingesetzt werden. Besonders bevorzugt ist Siliciumcarbid mit einem mittleren Korndurchmesser zwischen 1 µm und 50 µm.

Erfindungsgemäß ist aber auch Siliciumcarbid geeignet, das nach anderen Methoden hergestellt werden kann, so zum Beispiel aus Siliciumwasserstoff und Kohlenstoff, aus anorganischem Chlorsilan, organischen Chlorsilanen oder organischen polymeren Chlorsilanen nach literaturbekannten Methoden, so zum Beispiel durch Pyrolyse, Sublimation oder Dampfphasen-Sedimentation (Zusammenfassung in "Gmelin Handbook", l.c.). Bei diesen Verfahren können Siliciumcarbid-Partikel mit verschiedener Größe, Form und Oberflächenstruktur und damit variierbaren chromatographischen Eigenschaften entstehen.

Die Erfindung umfaßt ferner auch solches Adsorptions-bzw. chromatographisches Trägermaterial, bei dem Siliciumcarbid durch bekannte Techniken auf Formkörper bzw. Hilfsträger in Schichten oder Filmen aufgebracht wird. Solche Materialien können beispielsweise Glas- oder Kunststoffpartikel, Kieselgur, Kieselgel, Aluminiumoxid oder auch Siliciumcarbid selbst sein und weisen den Vorteil auf, daß gezielt Silicium-Partikel definierter Größe und regelmäßiger (Kugel-)Form bereitgestellt werden können. In diesen Fällen können gegebenenfalls die oben angegebenen Bereiche von Partikeldurchmessern unter- oder überschritten werden.

Erfindungsgemäß kann großtechnisch hergestelltes Siliciumcarbid mittels gängiger, hierfür geeigneter Bindemittel nach bekannten Methoden agglomerisiert werden, um so beispielsweise ein größeres und/oder kugelförmiges Material zu erhalten.

Das neue Adsorptions- und chromatographische Trägermaterial kann weiterhin bekannten physikalischen und/oder chemischen Behandlungsverfahren vor oder nach erfolgtem Einsatz unterworfen werden, um so gegebenenfalls durch Oberflächeneinwirkung die Trennleistung des Materials zu verbessern oder wiederherzustellen. Geeignete physikalische Vor- oder Nachbehandlungen von Siliumcarbid sind beispielsweise Tempern oder Sintern mit oder ohne Hilfsstoffe. Chemisch kann Siliciumcarbid zum Beispiel mit konzentrierten oder verdünnten starken oder schwachen anorganischen oder organischen Säuren oder Basen oder mit organischen Lösungsmitteln, Wasser, Pufferlösungen oder Wasser-/Lösungsmittelgemischen vor- oder nachbehandelt werden. Zur Reinigungszwecken eignen sich bevorzugt Laugen wie 0,1 N bis 1 N NaOH oder KOH. Hierdurch werden unter anderem gegebenenfalls vorhandenes freies Sili cium sowie unerwünschte Metalle, beispielsweise Magnesium und Aluminium, entfernt. Andere Oberflächenkontaminierungen können in bekannter Weise, z.B. mit Mitteln wie HCl, HF, $H_2SO_4$, HF/$HNO_3$ oder polaren organischen Lösungsmitteln wie Aceton, DMSO oder Dimethylformamid beseitigt werden.

In der Regel bewirkt eine Vor- oder Nachbehandlung von Siliciumcarbid eine Verbesserung der Adsorptions- bzw. Chromatographieeigenschaften bzw. eine Anpassung an den gewünschten Verwendungszweck.

Das neue Adsorptionsmaterial kann erfindungsgemäß auch an seiner Oberfläche modifiziert werden. Hierbei lassen sich mit Hilfe bekannter Techniken unpolare organische Reste, beispielsweise Alkylketten, auf die Siliciumcarbidoberfläche aufpolymerisieren. Die entstehenden Reversed Phase-Materialien (RP) sind in ihrem chromatographischen Verhalten den entsprechend modifizierten Kieselgelen ähnlich, weisen jedoch gegenüber diesen zusätzlich die genannten Vorteile auf. Bei Chromatographie im Alkalischen kann es bei RP-modifiziertem Siliciumcarbid zur Umkehrung der Elutionsreihenfolge im Vergleich zu RP-modifiziertem Kieselgel kommen. Dies kann in vorteilhafter Weise zur Erhöhung der Selektivität ausgenützt werden.

Siliciumcarbid läßt sich in Säulen füllen und ist so bestens für die Hochdruckflüssigkeitschromatographie geeignet. Da die Trennleistung sehr hoch ist, erübrigt sich in der Regel der Einsatz von langen, hohe Drucke erfordernden Säulen. Da das Material jedoch mechanischen Beanspruchungen widersteht, sind prinzipiell höhere Drucke im Vergleich zu Kieselgelsäulen möglich.

Siliciumcarbid kann auch in an sich bekannter Weise auf Glasplatten, Aluminium- oder Kunststoff-Folien mit oder ohne bekannte Bindemittel oder Haftstoffen aufgebracht und so der analytischen oder präparativen Dünnschichtchromatographie zugänglich gemacht werden.

Schließlich kann Siliciumcarbid auch im Batch-Verfahren eingesetzt werden.

Dem erfindungsgemäßen Adsorptionsmaterial lassen sich gegebenenfalls Konzentrierungsstoffe, Indikatoren oder weitere, dem speziellen Trennproblem förderliche Zusatzstoffe beifügen.

Da sich unmodifiziertes bzw. modifiziertes Siliciumcarbid qualitativ weitgehend wie jeweilig (un)modifiziertes Kieselgel verhält, entsprechen sich qualitativ etwa die jeweils erforderlichen mobilen Phasen. Dadurch wird auf Siliciumcarbid-Systemen ein nur relativ geringer Optimierungsaufwand gegenüber Kieselgelsystemen notwendig.

Im folgenden sind die Abbildungen erläutert.

Fig. 1: Auftrennung eines Gemisches aus Anthrachinon (1), Anisaldehyd (2), Dimethylphthalat (3), 3-Nitroacetophenon (4), Dimethylaminobenzaldehyd (5) und Vitamin $D_3$ (6) auf einer Siliciumcarbid-Säule (Korngröße: 3 μm, spez. Oberfläche: 1 m²/g, Säulendimension: 125 x 4 mm) mit n-Heptan als Eluent. Die Retentionszeiten sind in Minuten angegeben.

Fig. 2: Auftrennung eines Gemisches aus 2-Nitroacetanilid (1), 3-Nitroacetanilid (2) und 4-Nitroacetanilid (3) auf einer Siliciumcarbid-Säule (3 μm, 1 m²/g, 125 x 4 mm) mit tert.-Butylmethylether als Eluent.

Fig. 3: Auftrennung eines Gemisches aus 2-Nitroacetanilid (1), 3-Nitroacetanilid (2) und 4-Nitroacetanilid (3) auf einer Siliciumcarbid-Säule (3 μm, 1 m²/g, 125 x 4 mm) mit n-Heptan/Dioxan 80/20 (v/v) als Eluent.

Fig. 4a: Auftrennung eines Gemisches aus Anisol (1), 3-Nitroanisol (2), 4-Nitroanisol (3) und 2-Nitroanisol (4) auf einer Siliciumcarbid-Säule (1,5 μm, 15 m²/g, 30 x 40 mm, Schüttdichte 0,8 g/cm³) mit n-Heptan als Eluent.

Fig. 4b: Auftrennung desselben Gemisches auf einer Kieselgelsäule (10 μm, 33 m²/g, 30 x 4 mm, Schüttdichte 0,4 g/cm³) mit n-Heptan als Eluent.

Fig. 5a: Auftrennung eines Gemisches aus Benzol (1), Biphenyl (2), 1,3-Terphenyl (3), Quaterphenyl und m-Quinquephenyl auf einer Siliciumcarbid-Säule (1,5 μm, 15 m²/g, 30 x 4 mm, Schüttdichte 0,8 g/cm³) mit n-Heptan als Eluent.

Fig. 5b: Auftrennung desselben Gemisches auf einer Kieselgelsäule (10 μm, 33 m²/g, 30 x 4 mm, Schüttdichte 0,4 g/cm³) mit n-Heptan als Eluent.

Fig. 6: Auftrennung eines Gemisches der Betablocker Atenolol (1) und Propanolol (2) auf einer mit Polybutadien modifizierten Siliciumcarbidsäule (Basismaterial: Siliciumcarbid 15 m²/g, Korngröße > 4 μm) mit Acetonitril/Kaliumphosphatpuffer (pH 2,3), 10/90 (V/V) als Eluent. Angabe der Retentionszeiten in Minuten.

Fig. 7a: Auftrennung eines Gemisches von 5-Methyl-5-phenylhydantoin (1) und 5-(p-Methylphenyl)-5-phenylhydantoin (2) im alkalischen Medium auf einer mit Polybutadien modifizierten Siliciumcarbidsäule mit Acetonitril/Natriumphosphatpuffer (pH 9,2), 20/80 (V/V) als Eluent.

Fig. 7b: Auftrennung desselben Gemisches auf der gleichen Säule im sauren Medium mit Acetonitril/Kaliumphosphatpuffer (pH 2,3), 10/90 (V/V) als Eluent.

Fig. 8a: Auftrennung eines Gemisches von Nicotinsäure (1), Diphenhydramin . HCl (2), Diazepam (3) und 5-(p-Methylphenyl)-5-phenylhydantoin (4) auf einer mit Polybutadien modifizierten Siliciumcarbidsäule im sauren Medium mit Acetonitril/Kaliumphosphatpuffer (pH 2,3), 10/90 (V/V) als Eluent.

Fig. 8b: Auftrennung desselben Gemisches auf der gleichen Säule im alkalischen Medium mit Acetonitril/Kaliumphosphatpuffer (pH 9,2), 20/80 (V/V) als Eluent.

Beispiel 1

Siliciumcarbid der Fa. Lonza Ltd. (Basel, Schweiz), mit einem mittleren Partikeldurchmesser von 3 μm und einer spezifischen Oberfläche von ca. 1 m²/g (UF-05) wird in an sich bekannter Weise in eine Säule (LiChro CART®, Fa. E. Merck, Darmstadt), 125 x 4 mm, gepackt. Auf die Säule wird ein Gemisch aus Anthrachinon (1), Anisaldehyd (2), Dimethylphthalat (3), 3-Nitroacetophenon (4), Dimethylaminobenzaldehyd (5) und Vitamin $D_3$ (6), gelöst in Heptan, injiziert. Eluiert wird mit n-Heptan bei 103 bar und 1 ml/Min. Die Detektion erfolgt im UV-Bereich bei 250 nm.
Die Retentionszeiten ergeben sich zu:
(1-4): 1,21 Min.; (5): 1,33 Min.; (6): 1,65 Min.

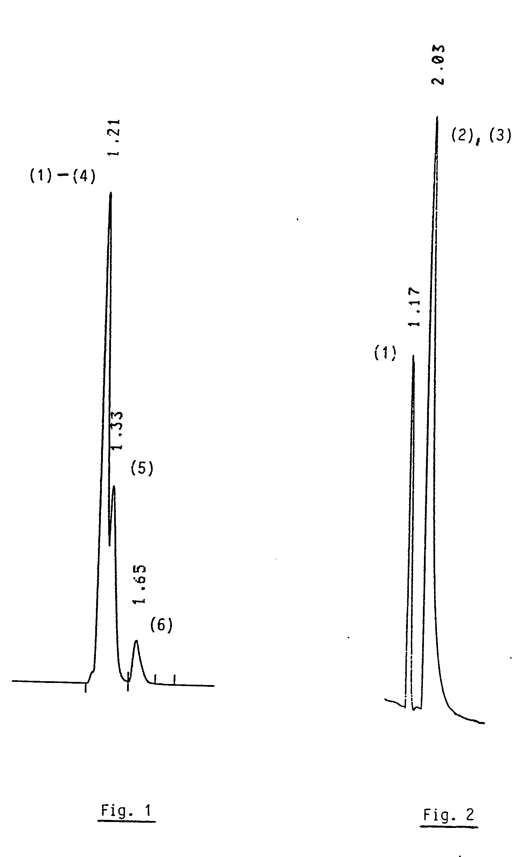

Trotz der äußerst geringen spezifischen Oberfläche des verwendeten Siliciumcarbids und des noch nicht optimierten Fließmittelsystems kann eine, wenn auch noch nicht vollständige, Auftrennung beobachtet werden (Fig. 1).

Beispiel 2

Auf die in Beispiel 1 beschriebe Säule, wird ein Gemisch von 2-Nitroacetanilid (1), 3-Nitroacetanilid (2) und 4-Nitroacetanilid (3) gelöst in Heptan/Dioxan appliziert und es wird mit tert. Butylmethylether unter den Bedingungen von Beispiel 1 eluiert. Man erhält das Elutionsdiagramm gemäß Fig. 2.
Retentionszeiten:
(1): 1,17 Min.; (2 + 3): 2,03 Min.

3- und 4-Nitroacetanilid können unter den noch nicht optimierten Bedingungen nicht vollständig aufgetrennt werden.

Beispiel 3

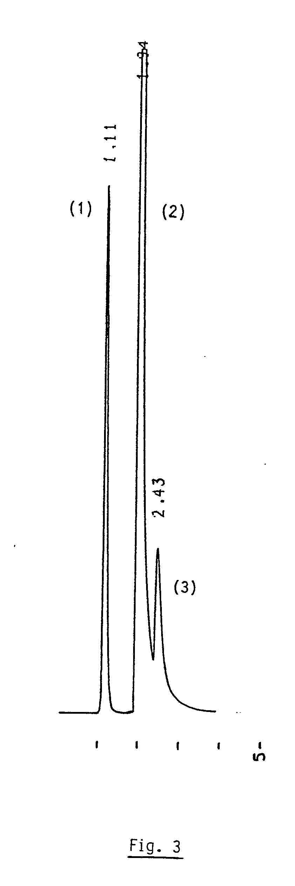

Ein Gemisch aus 2, 3, und 4-Nitroacetanilid wird analog Beispiel 2 mit einem Fließmittelgemisch, bestehend aus n-Heptan/Dioxan 80/20 (v/v) eluiert. Man erhält das Elutionsdiagramm gemäß Fig. 3.
Retentionszeiten:

2-Nitroacetanilid: 1,11 Min.;
3-Nitroacetanilid: 1,93 Min.;
4-Nitroacetanilid: 2,43 Min.

Die drei Isomeren sind jetzt trotz der geringen spezifischen Oberfläche getrennt.

Aus den Beispielen 1 bis 3 ist weiterhin ersichtlich, daß die Elutionsreihenfolge der von Kieselgel entspricht.

Beispiel 4

Eine analog Beispiel 1 mit Siliciumcarbid (3 μm, 1 m²/g) gefüllte Säule wird vor Beschickung mit dem zu trennenden Gemisch, bestehend aus 2-, 3- und 4-Nitroacetanilid, mit mehreren Säulenvolumina wäßriger NaOH-Lösung bei pH 11,5 gespült. Das Eluat enthält Aluminium und in Spuren Magnesium, Calcium, Eisen, Mangan, Chrom, Nickel, Titan und Kohlenstoff, jedoch kein Silicium. Nach Austausch der NaOH-Lösung durch ein n-Heptan/Dioxan-Gemisch 80/20 (v/v) wird das Nitroacetanilid-Gemisch aufgetragen und wie beschrieben eluiert.
Retentionszeiten:
2-Nitroacetanilid: 1,18 Min.;
3-Nitroacetanilid: 2,56 Min.;
4-Nitroacetanilid: 3,61 Min.

Im Vergleich zu Beispiel 3 haben sich die Retentionszeiten verlängert und die Abstände zwischen den einzelnen Elutionsprofilen haben sich vergrößert. Durch die Vorbehandlung ist die Auftrennung bei ansonsten identischen Bedingungen selektiver geworden.

Beispiel 5

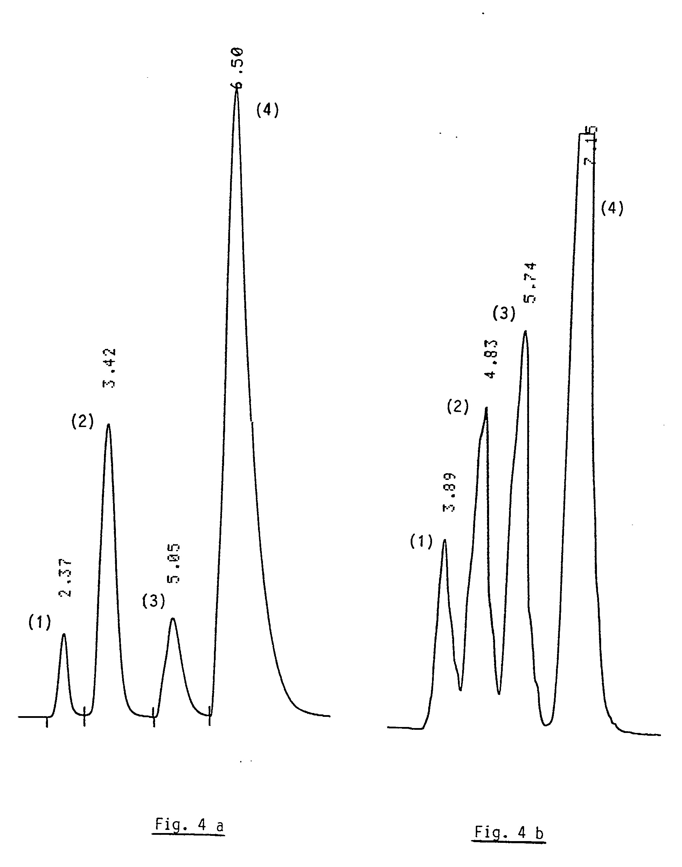

Siliciumcarbid mit einem mittleren Partikeldurchmesser von 1,5 μm und einer mittleren spezifischen Oberfläche von 15 m²/g (Fa. Lonza, UF-15) wird mehrere Tage in alkalischer Lösung (pH 10-13) suspendiert und anschliessend in eine Säule (LiChro CART® 30/4, Fa. E. Merck, Darmstadt) gepackt. Nach Auftragung eines Gemisches, bestehend aus Anisol (1), 3-Nitroanisol (2), 4-Nitroanisol (3) und 2-Nitroanisol (4), wird mit n-Heptan bei 150 bar und 0,2 ml/Min. eluiert (Detektion: 250 nm UV). Man erhält das Elutionsdiagramm gemäß Fig. 4a:
Retentionszeiten:
(1): 2,37 Min.; (2): 3,42 Min.;
(3): 5,05 Min.; (4): 6,50 Min.

Die Auftrennung der vier (Nitro)anisole ist hervorragend.

Beispiel 6

Auf einer gemäß Beispiel 5 vorbehandelten und gepackten Säule (15 m²/g, Schüttdichte: 0,8 g/cm³) wird ein Gemisch aus Oligophenylenen aufgetragen:

    (1) Benzol
    (2) Biphenyl
    (3) 1,3-Terphenyl
    (4) Quaterphenyl
    (5) m-Quinquephenyl.

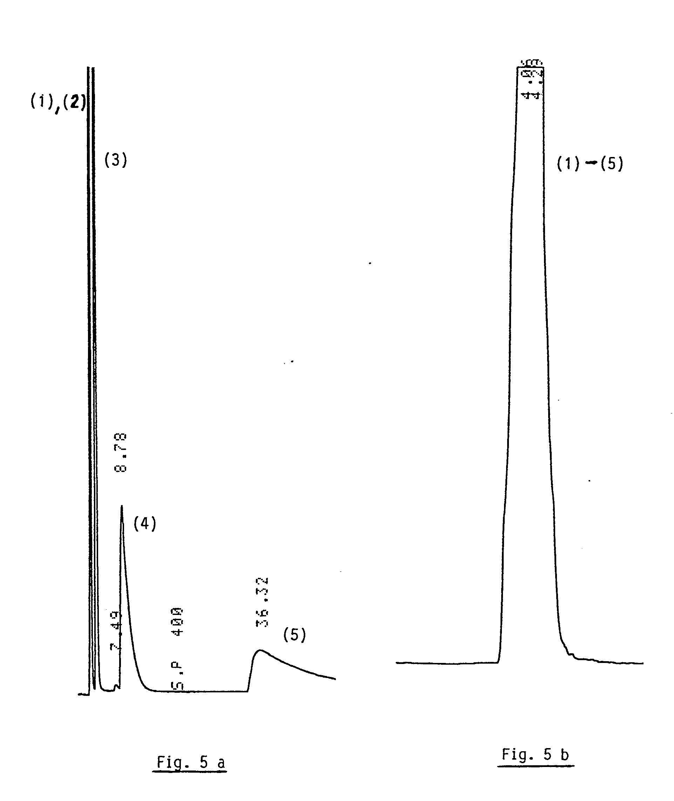

Die Elution erfolgt mit n-Heptan unter sonst identischen, wie in Beispiel 5 angegebenen Bedingungen. Man erhält das Elutionsdiagramm gemäß Fig. 5a.
Retentionszeiten:
(1): 2,46 Min.; (2): 3,46 Min.;
(3): 6,48 Min.; (4): 8,78 Min.;
(5): 36,32 Min.

Beispiel 7

Um die Selektivität von Siliciumcarbid und Kieselgel direkt miteinander zu vergleichen, wird eine Säule mit Kieselgel hergestellt, dessen aktive Oberfläche etwa der der Siliciumcarbid-Säule aus Beispiel 6 entspricht. Hierzu wird Kieselgel LiChrospher® Si 1000, 10 μm (Fa. E. Merck, Darmstadt) mit einer mittleren spezifischen Oberfläche von 33 m²/g und einer Schüttdichte von 0,4 g/cm³ in eine Säule (30 x 4 mm) gefüllt. Es wird das gleiche Gemisch an Oligophenylenen wie in Beispiel 6 aufgetragen und ebenfalls mit n-Heptan eluiert. Man erhält das Elutionsdiagramm nach Fig. 5b. Eine Auftrennung der Oligophenylene ist praktisch nicht erfolgt. Die Selektivität von Kieselgel gegenüber Siliciumcarbid ist hier also deutlich geringer.

Beispiel 8

Auf eine Kieselgel-Säule analog Beispiel 7 wird ein Gemisch aus Anisol (1), 3-Nitroanisol (2), 4-Nitroanisol (3) und 2-Nitroanisol (4) aufgetragen und mit n-Heptan eluiert. Man erhält eine Auftrennung gemäß Fig. 4b, die im Vergleich zu einer entsprechenden Siliciumcarbid-Säule (Beispiel 5, Fig. 4a) wiederum weniger selektiv ist.

Beispiel 9

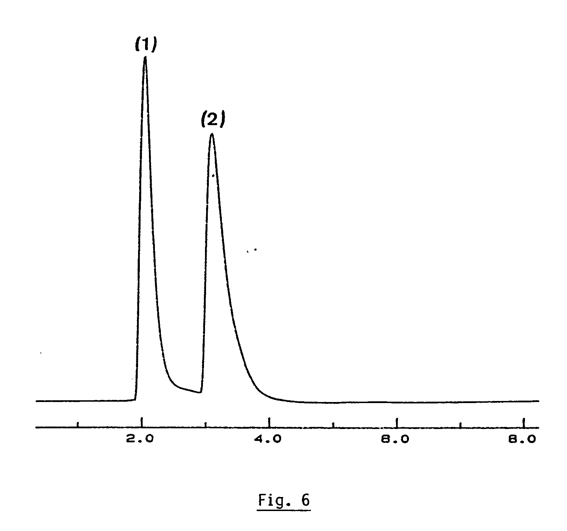

Siliciumcarbid mit einem Partikeldurchmesser von mehr als 4 μm und einer mittleren spezifischen Oberfläche von 15 m²/g (Fa. Lonza, UF-15) wird ohne weitere Vorbehandlung durch Aufbrennen von Polybutadien in an sich bekannter Weise oberflächenmodifiziert (z.B. Schomburg et al., Chromatographia Vol. 19, S. 170, 1984) so daß ein Material mit Reversed Phase-Eigenschaften entsteht. Dieses Material wird anschließend in eine Säule (LiChro CART® 125/4, Fa. E. Merck, Darmstadt) gepackt. Nach Auftragen eines Gemisches der Betablocker Atenolol (1) und Propanolol (2) wird mit einem Lösungsmittelgemisch, bestehend aus Acetonitril und 6,7 g/l Kaliumdihydrogenphosphat/Phosphorsäure pH 2,3, 10/90 (V/V), bei 150 bar und 0,5 ml/Min. eluiert (Detektion bei 227 nm UV). Man erhält das Elutionsdiagramm gemäß Fig. 6.

Beispiel 10

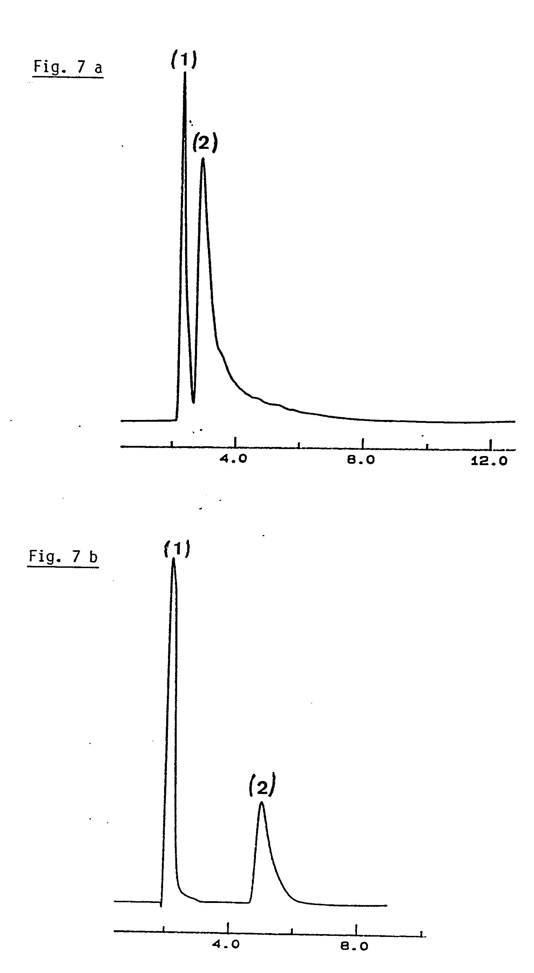

Auf eine mit Polybutadien modifizierte Siliciumcarbidsäule analog Beispiel 9 wird ein Gemisch aus 5-Methyl-5-phenylhydantoin (1) und 5-(p-Methylphenyl)-5-phenylhydantoin (2) aufgetragen und mit Acetonitril/0,05 M Natriumhydrogenphosphatpuffer (pH 9,2), 20/80 (V/V) eluiert. Man erhält das Elutionsdiagramm gemäß Fig. 7a (Detektion bei 220 nm UV).

Beispiel 11

In Analogie zu Beispiel 10 wird das gleiche Gemisch auf der gleichen Säule mit dem sauren Elutionsgemisch gemäß Beispiel 9 chromatographiert. Man erhält das Elutionsdiagramm gemäß Fig. 7b. Aus den Figuren 7a und 7b ist zu entnehmen, wie die Selektivität der Trennung durch pH-Wert-Änderung beeinflußt werden kann.

Beispiel 12

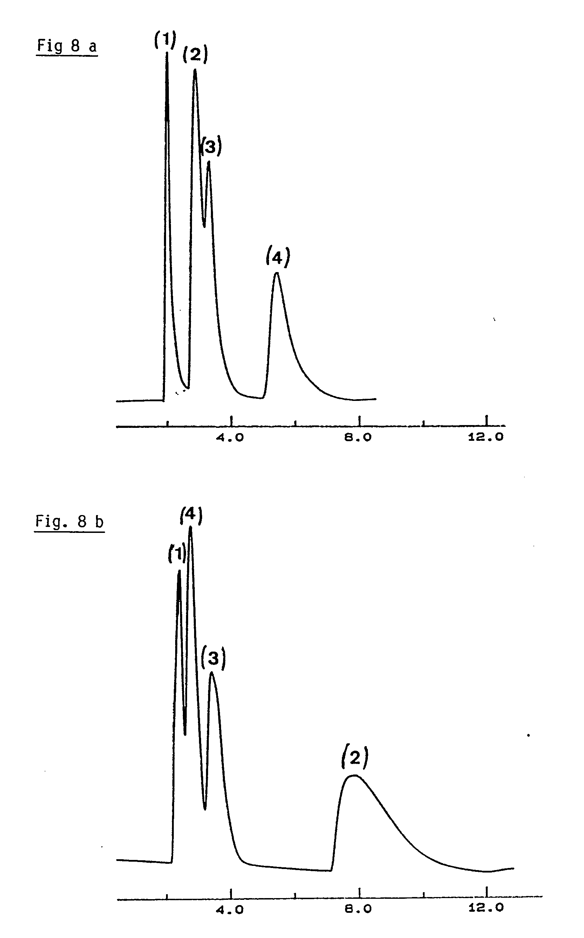

Auf eine mit Polybutadien modifizierte Siliciumcarbidsäule analog Beispiel 9 wird ein Gemisch aus Nicotinsäure (1), Diphenhydramin • HCl (2), Diazepam (3) und 5-(p-Methylphenyl)-5-phenylhydantoin (4) aufgetragen und mit dem sauren Elutionsgemisch gemäß Beispiel 9 eluiert. Man erhält das Elutionsdiagramm gemäß Fig. 8a (Detektion bei 220 nm UV).

Beispiel 13

In Analogie zu Beispiel 12 wird das gleiche Gemisch auf der gleichen Säule mit dem alkalischen Elutionsgemisch gemäß Beispiel 10 eluiert. Man erhält das Elutionsdiagramm gemäß Fig. 8b. Wie die Diagramme zeigen, ist die Selektivität der Trennung im Alkalischen größer. Gleichzeitig ist durch die vorgenommene pH-Wert-Erhöhung eine Umkehrung der Elutionsreihenfolge zu beobachten.

**Ansprüche**

1. Adsorptionsmaterial, im wesentlichen bestehend aus Siliciumcarbid.

2. Verwendung von Siliciumcarbid als Adsorptionsmittel.

3. Verwendung von Siliciumcarbid als Trägermaterial in der Chromatographie.

Fig. 1

Fig. 2

Fig. 3

Fig. 4 a

Fig. 4 b

(1),(2)

(3)

8.78

(4)

7.49

5,P 400

36.32

(5)

(1) — (5)

Fig. 5 a

Fig. 5 b

Fig. 6

Fig. 7 a

Fig. 7 b

Fig 8 a

(1)
(2)
(3)
(4)

4.0          8.0          12.0

Fig. 8 b

(4)
(1)
(3)
(2)

4.0          8.0          12.0

Europäisches
Patentamt

**EUROPÄISCHER RECHERCHENBERICHT**

Nummer der Anmeldung

EP 89 12 0272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 90, 1979, Seite 437, Zusammenfassung Nr. 210656c, Columbus, Ohio, US; & SU-A-657 837 (V.A. KRASOV) 25-04-1979 * Zusammenfassung * --- | 1,2 | B 01 J 20/02 |
| A | CHEMICAL ABSTRACTS, vol. 82, 1975, Seite 520, Zusammenfassung Nr. 170701q, Columbus, Ohio, US; & JP-A-74 124 070 (NIPPON STEEL CHEMICAL INDUSTRY CO., LTD) 27-11-1974 * Zusammenfassung * ----- | 1,2 | |

| | | | RECHERCHIERTE SACHGEBIETE (Int. Cl.5) |
|---|---|---|---|
| | | | B 01 J |

Der vorliegende Recherchenbericht wurde für alle Patentansprüche erstellt

| Recherchenort | Abschlußdatum der Recherche | Prüfer |
|---|---|---|
| DEN HAAG | 22-02-1990 | WENDLING J.P. |